# EUROPEAN PATENT APPLICATION

(11) **EP 1 226 857 A2**
(43) Date of publication of application: **31.07.2002**
(21) Application number: 02000427.1
(22) Date of filing: 08.01.2002
(51) Int. Cl.: B01D 17/025

(54) **Method and apparatus for separation of a liquid phase from a two phase fluid flow in a low density fraction and a high density fraction**

(30) Priority: 25.01.2001 DK 200100131
(71) Applicant: Haldor Topsoe A/S, 2800 Kgs. Lyngby (DK)
(72) Inventor: Hommeltoft, Sven Ivar, 3400 Hillerod (DK)

(57) **Abstract**

A method for separating a two-phase mixture of two immiscible fluids into a first fluid and a second fluid and simultaneously separating at least one of the first and second fluid in a fraction with high density and a fraction with low density where the fractions are miscible comprising the steps of a separation tray
subjecting the two-phase mixture to a first gravity separation and withdrawing separately the first and a second fluid, and
subjecting at least one of the first and second fluid to a second gravity separation, which is a float separation and separating at least one of the first and second fluid into a light and a heavy fraction by means of a float having a density between the densities of the two fluid fractions.

## Description

### BACKGROUND OF THE INVENTION

### Field of the Invention

The invention relates to separation of two immiscible liquids or of a gas and a liquid and simultaneously separation of one of the liquid phases into a light fraction and a heavy fraction.

The invention is specifically directed to a vertical column with a bed of packing material and with a downward flow of two immiscible fluid phases where one phase consists of two miscible zones, however, moving so slowly that the zones or fractions do not mix and with means for the separations at the bottom of the column.

### Description of Related Art

Both vapour-liquid separation and liquid-liquid separation are well established processes in the chemical and petrochemical industries.

Christman (US Patent No. 4,234,544) discloses separation of two liquid phases in an extraction column by use of a large volume horizontal separation chamber below each tray. Martinsen (US Patent No. 6,071,420) discloses an apparatus for separation of immiscible liquids of different densities using a vertical inlet pipe, which is surrounded by another pipe placed in a separation tank. By heating a stream of the mixed layer and recycling it through said inlet pipe a high degree of separation is obtained.

Prior art fails to describe continuously separation of a process stream with two fluid phases and simultaneously separation of at least one of the liquid phases into a low density fraction and a high density fraction, even when the fractions are miscible.

### SUMMARY OF THE INVENTION

The invention provides a separation method and apparatus for separating a process stream consisting of two immiscible fluid phases, where at least one of the phases is liquid and consists of two miscible zones or fractions. The method includes a gravity separation and a float separation. The two phases are moving downwards through a packed bed in a column and at the bottom of the column a separation tray in accordance with the invention is installed. The tray separates the two phases and simultaneously separates at least one of the liquid phases into a light fraction and a heavy fraction.

The tray consists of at two or three horizontal plates with some space between and a number of chimneys extending from a distance above the upper plate and down through the plates. Two different kinds of chimneys are installed. One kind has holes at the top and the other kind has holes just above the upper plate. In the pipe where the density separation takes place a contraction and a float above the contraction are installed and the pipe has a hole just below the upper plate. The float will distinguish between the heavy fraction and the light fraction.

### BRIEF DESCRIPTION OF THE DRAWINGS

Fig. 1 is a vertical cross section of a preferred embodiment of the invention, showing the plates and the two kinds of chimneys in case the heavy phase is present as a heavy zone and a light zone and the light density zone is accumulated.
Fig. 2 is a horizontal view showing one embodiment of preferred distribution of the chimneys.
Fig. 3 is a vertical cross section of a preferred embodiment of the invention showing the plates and the two kinds of chimneys in case the light liquid phase is present as a heavy zone and a light zone and the heavy density zone is accumulated.

### DETAILED DESCRIPTION OF THE INVENTION

The invention provides a method and apparatus for separation of a fluid comprising two immiscible phases, where at least one phase is a liquid being present as two zones or fractions, and where the two phases flow downwards in a packed bed in a column including a tray according to the invention, where the two phases are separated and at least one phase is separated in two fractions with different density and chemical composition and being miscible however flowing so slowly that the fractions do not mix.

The separations take place in a special tray installed in the column. The tray consists of two or three horizontal plates and two kinds of chimneys. The plates are installed with some distance between each other; the chimneys extend from a distance above the upper plate and down through the plates. The chimneys are closed at top and some of them can be closed by threaded caps.

A gravity separation is performed above upper surface of upper plate as one kind of chimney has the inlet hole at the top of the chimney and the light phase enters through these holes, which are sloping upwards to obtain a better separation. The other kind of chimney has holes just above the upper plate and the heavy phase enters these holes. The density separation takes place in chimneys equipped with a contraction and a float. Which kind of chimneys depends on which liquid phase is separated in a high and low density fraction.

The float has a density between the densities of the light fraction and the heavy fraction of the relevant liquid phase. Thereby, when the liquid is heavier than the float, the float is lifted and the liquid flows down through the chimney. Similarly, when the liquid is lighter than the float, the float rests on the contraction and seals it and the liquid flows out through a hole under the plate above and is accumulated in the space between the plates. The high number and the even distribution of chimneys ensure efficient separation also if the interface between the light fraction and the heavy fraction does not form an even, horizontal plane.

In case of an uneven interface, some of the lighter fraction flows down through some of the float chimneys and simultaneously, some of the heavier fraction flows down through the rest of this kind of chimneys. As each chimney independently distinguishes between the two fractions, still the lighter fraction is accumulated and the heavier fraction is flowing down through the chimney also in this situation, where the interface is uneven.

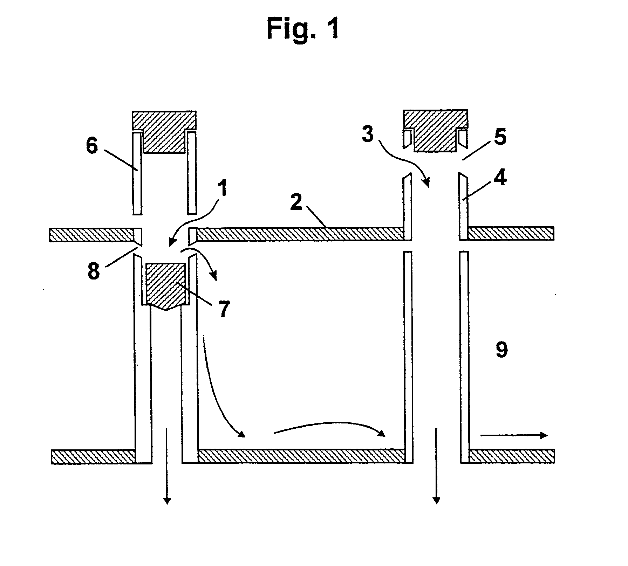

On Fig. 1 a separation tray for separating the heavy phase 1 into a light and a heavy fraction and accumulating the light fraction is shown. The heavy liquid phase will fall to the upper bottom 2 while the light liquid phase 3 will stream to the low density chimney 4 through the holes 5 at the top, where the holes are sloping upwards to obtain a better separation. The heavy phase enters a high density chimney 6 just above the upper plate, the chimney contains a contraction with a float 7 above.

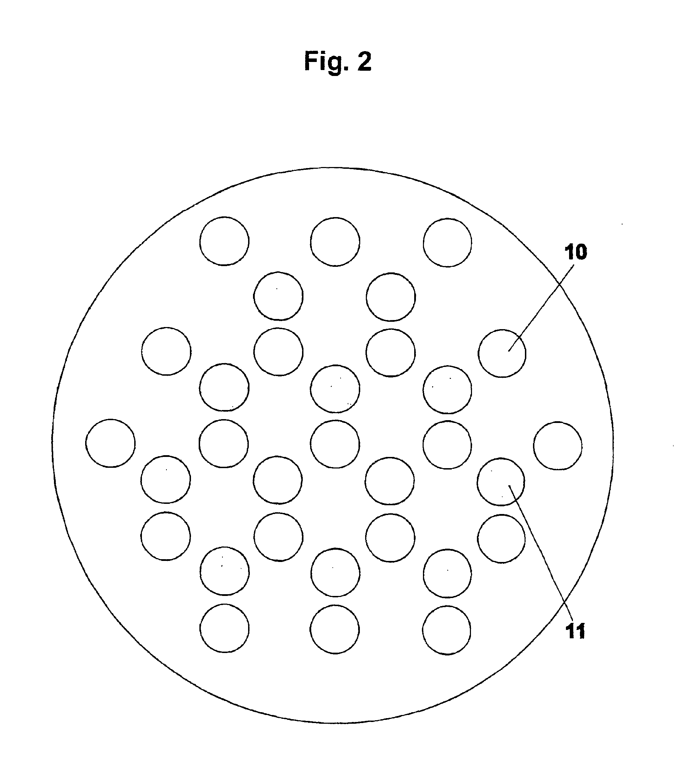

When the density of the liquid is lower than the density of the float, the float will seal the outlet and the liquid leaves the chimney through hole 8 just below upper plate and accumulates in the space 9 between the two plates. When the density of the liquid is higher than the density of the float the float is lifted and the liquid flows down through the chimney 6. Optionally, these chimneys can be closed by threaded caps and the floats can be removed from the pipe and replaced by floats with another density, which will separate liquids in fractions with other densities. One suggested way of distribution of high density chimneys 10 and low density chimneys 11 is shown on Fig. 2.

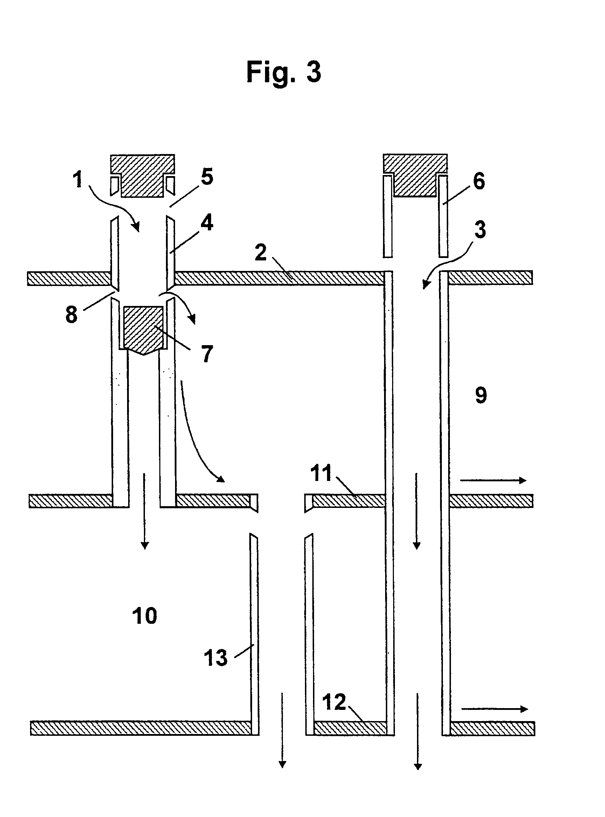

A separation tray for separating the light phase 1 in a light and a heavy fraction and accumulating the heavy fraction is shown on Fig. 3. The heavy liquid phase will fall to the upper bottom 2, while the light liquid phase will stream to the low density chimney 4 through the holes 5 at the top, where the holes are sloping upwards to obtain a better separation.

The heavy phase enters a high density chimney 6 just above the upper plate through hole 3. The low density chimney 4 contains a contraction with a float 7 above. When the density of the liquid is lower than the density of the float, the float will seal the outlet and the liquid leaves the chimney through hole 8 just below upper plate and enters the space 9 between the two plates.

When the density of the liquid is higher than the density of the float, the float is lifted and the liquid flows down through the chimney 4 to the space 10 between the middle plate 11 and the lower plate 12. The light fraction of the light phase streams from space 9 to below the tray through transfer pipe 13. Optionally, these chimneys can be closed by threaded caps so the floats can be removed from the pipe and replaced by floats with another density, which will separate liquids in fractions with other densities. A specific use of the invention is separation in a reactor with a liquid process stream and a liquid catalyst, the reactor being a column packed with a catalyst support and below this a separation tray in accordance with the invention is installed.

The process stream may be a light hydrocarbon and the catalyst is a volume of a liquid with a density higher than the density of the hydrocarbon. The process stream flows downwards, the catalyst is in principle stationary, however, it moves downwards as well, however, much more slowly than the hydrocarbon. During operation some of the catalyst undergoes a change and this spent catalyst has a different density than the one of the fresh catalyst. The catalyst volume moves slowly towards the bottom as two cylindrical zones one with spent catalyst and one with fresh catalyst. The fresh and the spent catalyst do not mix, however, the interface may not be quite evenly horizontal or plane.

When the catalyst approaches the reactor bottom, it reaches the separation tray, which separates the light hydrocarbon from the heavy catalyst, and the float will separate the heavy zone or fraction of catalyst from the light fraction of catalyst. The high number of separation chimneys ensures efficient separation of spent catalyst from fresh catalyst even if the interface is not quite plane. The invention is particular useful for alkylation where iso-butane, which has the specific gravity 0.6 is alkylated by an olefin in the presence of triflic acid acting as a catalyst and having the specific gravity 1.6-1.7 when it is fresh, and 1.2-1.4 when it is spent. The light and the heavy acid move in such a way that the light, spent acid moves below the heavy part, still spent and fresh acid do not mix and they are separated by the floats in the chimneys. The float can be made from PVC (polyvinyl chloride) having the specific gravity 1.4, as this will let fresh catalyst pass down through the chimney pipe, while the spent catalyst will accumulate between the plates of the separation tray from where it can be removed when convenient.

In a hydrocarbon conversion process such as hydrotreating or hydrocracking in which a hydrocarbon containing stream is treated by a gaseous reagent such as hydrogen over a catalyst in a fixed bed or trickle bed reactor, the product stream typically has a density which depends on the conversion. Hydrotreating converts unsaturated reactants in oil into saturated compounds by addition of hydrogen.

The hydrogenated product typically has a lower density than the reactants, and therefore it is possible to determine the conversion level by the density of the liquid product.

Similarly in hydrocracking in which the product at the same time is more saturated and has lower average molecular weight the density of the product normally would be expected to fall as the conversion increases. It is, therefore, possible to use the separation tray of this invention to distinguish a more converted and thus less dense stream from a less converted and higher density stream while allowing the hydrogen containing gas to pass unhindered down through the reactor.

By the use of the density separation tray it is therefore possible to withdraw a product that is sufficiently converted and allowing less converted material to be further converted by staying in the reactor under the separation tray. This minimises the use of hydrogen and at the same time, excessive conversion, which may lead to less desirable products, may be avoided.

## Claims

1. A method for separating a two-phase mixture of two immiscible fluids into a first fluid and a second fluid and simultaneously separating at least one of the first and second fluid in a fraction with high density and a fraction with low density where the fractions are miscible comprising the steps of a separation tray
subjecting the two-phase mixture to a first gravity separation and withdrawing separately the first and a second fluid, and
subjecting at least one of the first and second fluid to a second gravity separation, which is a float separation and separating at least one of the first and second fluid into a light and a heavy fraction by means of a float having a density between the densities of the two fluid fractions.

2. The method of claim 1, wherein the gravity separation is performed by means of the separation tray provided with a plurality of first and second chimneys, the fluid with low density enters the first chimneys having holes at top, and the fluid with high density enters the second chimneys having holes adjacent to an upper surface of the separation tray, and
wherein the float separation is performed by means of a float installed in the first and/or the second chimneys having a density between the densities of the two fractions and wherein the light fraction is withdrawn from the chimneys through holes above the float and the heavy fraction is passed through the chimneys.

3. Method in accordance with claim 1, wherein the first fluid and the second fluid is a liquid.

4. Method in accordance with claim 1, wherein the first fluid is a liquid and the second fluid is a gas.

5. An apparatus for use in a method in accordance with anyone of the preceding claims, comprising a tray with at least two plates and with a plurality of first and second chimneys, the first chimneys having sloping holes at top, wherein the light fluid enters the chimney, the second chimneys having holes at an upper surface of an upper plate and wherein the heavy fluid enters the chimney, at least one of the two chimneys having a contraction installed and a float above the contraction inserted, the float has a density between the densities of two liquid fractions to be separated, the chimney has a liquid outlet above the float at a lower surface of the upper plate the float is adapted to rest on and seal the contraction when the fluid in the chimney has a density lower than the density of the float, and the float is adapted to be lifted when the fluid has a density higher than the density of the float.

6. Apparatus of claim 6, wherein top cover of the density separating chimneys is removable and the float can be replaced with another float having another density.
